(19) Europäisches Patentamt
European Patent Office
Office européen des brevets

(11) **EP 1 933 406 A1**

(12) **EUROPEAN PATENT APPLICATION**
published in accordance with Art. 153(4) EPC

(43) Date of publication:
**18.06.2008 Bulletin 2008/25**

(51) Int Cl.:
***H01M 8/02*** (2006.01)

(21) Application number: **06811652.4**

(22) Date of filing: **05.10.2006**

(86) International application number:
**PCT/JP2006/320355**

(87) International publication number:
**WO 2007/043600 (19.04.2007 Gazette 2007/16)**

(84) Designated Contracting States:
**DE FR GB IT**

(30) Priority: **07.10.2005 JP 2005294670**

(71) Applicant: **Tokai Carbon Company, Ltd.**
**Minato-ku,**
**Tokyo 107-8636 (JP)**

(72) Inventors:
• **INADA, Ichiro**
**Tokyo 1078636 (JP)**

• **DAITOKU, Hidenori**
**Tokyo 1078636 (JP)**
• **SUGANUMA, Etsuro**
**Tokyo 1078636 (JP)**

(74) Representative: **Müller-Wolff, Thomas**
**Patentanwalt,**
**Postfach 19 02 17**
**53037 Bonn (DE)**

(54) **SEPARATOR MATERIAL FOR FUEL CELL AND PROCESS FOR PRODUCING THE SAME**

(57)    A fuel cell separator material which exhibits excellent electrical conductivity, high gas impermeability, high strain at break, and excellent strength, and a process of producing the same are disclosed. The fuel cell separator material includes a graphite/cured resin molded product obtained by binding spherical natural graphite particles with a thermosetting resin, the spherical natural graphite particles being prepared by spheroidizing natural flake graphite having an average particle diameter of 1 to 50 $\mu$m by dry impact blending, and having an average particle diameter of 20 to 100 $\mu$m, a particle density measured in water of 2 g/cm³ or more, and a compression recovery rate when pressurized at 50 MPa of 120% or less, and a density during compression of 1.9 g/cm³. The process includes preparing spherical natural graphite particles having the above properties, mixing the spherical natural graphite particles and a thermosetting resin so that the weight ratio of the graphite particles and the solid content of the resin is 90:10 to 65:35, drying and grinding the mixture to prepare a molding powder, filling a mold provided with protrusions for forming gas passages with the molding powder, and thermocompression-molding the molding powder at a temperature of 120°C or more and a pressure of 20 to 100 MPa.

**Description**

TECHNICAL FIELD

The present invention relates to a separator material for fuel cells such as a polymer electrolyte fuel cell or a phosphoric acid fuel cell, and a process of producing the same.

BACKGROUND ART

A fuel cell separator material is required to exhibit high conductivity in order to reduce the internal resistance of the cell to increase power generation efficiency. The fuel cell separator material is also required to exhibit high gas impermeability in order to completely separately supply a fuel gas and an oxidant gas to electrodes. The fuel cell separator material is further required to exhibit high strength and high corrosion resistance so that breakage does not occur during cell stack assembly and cell operation.

A carbon material has been used as the separator material for which the above properties are required. As the carbon material, a graphite material has low density. A glasslike carbon material is dense and exhibits excellent gas impermeability, but is hard and brittle, resulting in poor processability. Therefore, a carbon and cured resin molded product produced by binding a carbon powder (e.g., graphite) using a thermosetting resin (binder) and molding the resulting product has been suitably used as the separator material.

For example, JP-A-11-297337 discloses a method of producing a polymer electrolyte fuel cell separator member, wherein a carbon and cured resin molded product obtained by mixing a thermosetting resin with a carbon powder in an amount of 10 to 100 parts by weight based on 100 parts by weight of the carbon powder and curing the mixture, is thermocompression-bonded to each side of a thin metal sheet, and gas grooves are formed in the cured resin molded product. JP-A-2000-021421 discloses a method of producing a polymer electrolyte fuel cell separator member, wherein 60 to 85 wt% of a graphite powder having an average particle diameter of 50 $\mu$m or less, a maximum particle diameter of 100 $\mu$m or less, and an aspect ratio of 3 or less and 15 to 40 wt% of a thermosetting resin having a non-volatile content of 60% or more are mixed under pressure, the mixture is ground, placed in a mold, degassed under reduced pressure, and molded under pressure, and the molded product is processed into a specific shape and then cured by heating at 150 to 280°C (or cured by heating at 150 to 280°C and then processed into a specific shape).

JP-A-2001-126744 discloses a fuel cell separator formed of graphite particles and non-carbonaceous thermoplastic resin, wherein the graphite particles include at least coarse graphite particles having an average particle diameter (D50%) of 40 to 120 $\mu$m. JP-A-2001-126744 discloses combining the coarse graphite particles with graphite particles having an average particle diameter smaller than that of the coarse graphite particles with which the space between the coarse graphite particles can be filled as the graphite particles.

Graphite particles have significant anisotropy due to their crystal structure. In order to obtain highly crystalline graphite particles which exhibit a low degree of anisotropy, JP-A-2003-238135 discloses a method of producing spheroidized graphite particles in which raw material graphite particles are supplied to a processing device provided with an impact member which rotates at high speed around a shaft in a casing together with an air stream from the outside of the rotation path of the impact member, and spheroidized graphite particles are removed from the inside of the rotation path of the impact member.

JP-A-2004-269567 discloses a moldable conductive composition formed of pelletized graphite particles and a resin. This conductive composition has high moldability which allows injection molding even if the resin content is low, exhibits excellent electrical properties and mechanical properties, and has isotropic properties. JP-A-2004-269567 also discloses a polymer electrolyte fuel cell separator formed of this conductive composition.

The applicant of the present invention discloses a method of producing a polymer electrolyte fuel cell separator material comprising mixing a thermosetting resin with a graphite powder of which the average particle diameter is adjusted to 70 $\mu$m or less, the maximum particle diameter is adjusted to 300 $\mu$m or less, and the content of particles having a particle diameter of 10 $\mu$m or less is adjusted to 20 wt% or less by smoothing the particle surface by mechanical grinding so that the resin solid content is 15 to 26 parts by weight based on 100 parts by weight of the graphite powder, drying the mixture to remove a solvent, grinding the resulting product to obtain a molding powder, filling a mold with the molding powder, and thermocompression-molding the molding powder at a pressure of 20 to 50 MPa and a temperature of 150 to 250°C (see JP-A-2004-253242).

DISCLOSURE OF THE INVENTION

The fuel cell separator material is required to exhibit low electrical resistance, high gas impermeability, high strength, and high corrosion resistance, as described above. It is effective to reduce the amount of resin as a binder in order to reduce electrical resistance. However, when the amount of resin is reduced, moldability deteriorates. Moreover, densification and homogenization of the structure of the molded product become insufficient, whereby it becomes difficult to achieve high gas impermeability and high strength.

In recent years, in order to achieve an increase in output, a reduction in size, and an increase in cell performance and produce a stack structure with a fast startup time, a separator having a small heat capacity has been desired. Therefore, a separator having a reduced thickness (e.g., less than 0.3 mm) has been increasingly desired.

In order to reduce the thickness of the separator, it is effective to improve the moldability and fluidity of a mixture of graphite particles and a thermosetting resin. On the other hand, an increase in moldability is limited when merely improving the properties of the thermosetting resin.

When the thickness of the separator is reduced, the separator easily breaks due to small cracks. Therefore, a material having a strength sufficient to suppress breakage (i.e., high strain at break) is necessary.

The inventors of the present invention conducted studies on improvement in the moldability of a molding material (i.e., mixture of graphite particles and thermosetting resin), and the strength and electrical properties of a graphite and cured resin molded product, while focusing on the properties of graphite particles to achieve the present invention. An object of the present invention is to provide a fuel cell separator material which exhibits excellent electrical conductivity, high gas impermeability, high strain at break, and excellent strength, and a process of producing the same.

A fuel cell separator material according to the present invention which achieves the above object comprises a graphite and cured resin molded product (hereinafter, called "graphite/cured resin molded product") obtained by integrally binding spherical natural graphite particles with a thermosetting resin, the spherical natural graphite particles being prepared by spheroidizing natural flake graphite having an average particle diameter of 1 to 50 $\mu$m by dry impact blending, and having (1) an average particle diameter of 20 to 100 $\mu$m, (2) a particle density measured in water of 2 g/cm$^3$ or more, and (3) a compression recovery rate when pressurized at 50 MPa of 120% or less.

A process of producing a fuel cell separator material according to the present invention comprises spheroidizing natural flake graphite having an average particle diameter of 1 to 50 $\mu$m by dry impact blending to prepare spherical natural graphite particles having (1) an average particle diameter of 20 to 100 $\mu$m, (2) a particle density measured in water of 2 g/cm$^3$ or more, and (3) a compression recovery rate when pressurized at 50 MPa of 120% or less, mixing the spherical natural graphite particles and a thermosetting resin so that the weight ratio of the graphite particles and the solid content of the resin is 90:10 to 65:35, drying and grinding the mixture to prepare a molding powder, filling a mold provided with protrusions for forming gas passages with the molding powder, and thermocompression-molding the molding powder at a temperature of 120°C or more and a pressure of 20 to 100 MPa.

The fuel cell separator material according to the present invention is formed of a graphite/cured resin molded product obtained by integrally binding the spherical natural graphite particles prepared by spheroidizing (pelletizing) minute natural flake graphite by dry impact blending with the thermosetting resin. A fuel cell separator material which exhibits excellent electrical conductivity, high gas impermeability, high strain at break, and excellent strength can be obtained by setting the properties of the spherical natural graphite particles in a specific range.

BRIEF DESCRIPTION OF THE DRAWINGS

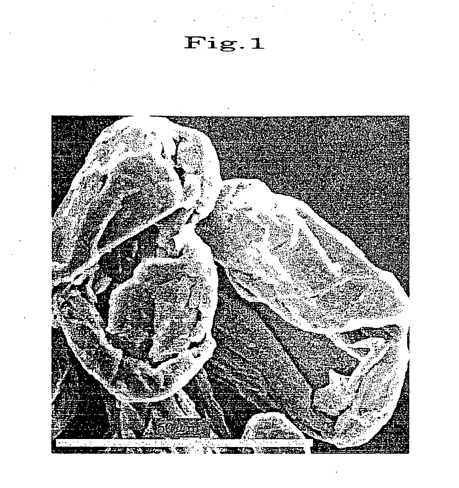

FIG. 1 is a micrograph showing the structure of spherical natural graphite particles of Example 2.

BEST MODE FOR CARRYING OUT THE INVENTION

The fuel cell separator material according to the present invention is formed of a graphite/cured resin molded product obtained by integrally binding spherical natural graphite particles with a thermosetting resin. The spherical natural graphite particles are prepared by spheroidizing natural flake graphite by dry impact blending.

In order to disperse graphite particles in a resin to prepare a graphite/cured resin molded product having high strength and high strain at break, it is preferable that the number of large graphite particles be small and minute graphite particles be uniformly dispersed in the resin. However, since the mixture of minute graphite particles and a thermosetting resin has low fluidity, it is difficult to form a molded product having a homogeneous structure (texture). In the present invention, natural graphite which has high sliding fluidity, high self-aggregation properties, and a high degree of graphitization is used to solve the above problem. Specifically, since artificial graphite has a low degree of graphitization, low self-aggregation properties, and low fluidity when thermocompression-molding a mixture, it is difficult to form a molded product having a homogeneous structure.

In the present invention, natural flake graphite is used as minute graphite particles, and spherical natural graphite particles prepared by aggregating and spheroidizing the natural flake graphite is dispersed in a thermosetting resin. The spherical natural graphite particles are deformed during thermocompression molding so that the graphite particles are crushed due to collision. This increases the distance between the minute natural flake graphite particles which form the spherical natural graphite particles, whereby the space between the natural flake graphite particles is filled with the thermosetting resin so that a homogeneous and dense structure is formed.

As the natural graphite, natural flake graphite having an average particle diameter of 1 to 50 $\mu$m is used. If the average particle diameter is less than 1 $\mu$m, the natural flake graphite shows low self-aggregation properties. Therefore, the density of a molding powder prepared by grinding a mixture of the natural flake graphite and the thermosetting resin decreases. If the average particle diameter exceeds 50 $\mu$m, the graphite/cured resin molded product shows a reduced strain at break upon bending so that breakage easily occurs. Moreover, when reducing the thickness of a separator material formed of the graphite/cured resin molded product to 0.3 mm or less, for example, it becomes difficult to achieve sufficient gas impermeability.

The fuel cell separator material according to the present invention is formed by integrally binding spherical natural graphite particles prepared by spheroidizing the above natural flake graphite having an average particle diameter of 1 to 50 $\mu$m by dry impact blending with the thermosetting resin.

The term "dry impact blending" used herein refers to a method which agglomerates and spheroidizes natural flake graphite while controlling the shape using a device such as a hybridization system (NHS-O manufactured by Nara Machinery Co., Ltd.). In the spheroidization process, natural flake graphite is supplied from the center of a rotor of a device having a rotor which rotates at high speed, a stator, and a circulation path. The natural flake graphite is mainly subjected to impact, compression, and shear force due to collision with the rotor and collision between the graphite particles, and moves to the outer circumferential portion together with an air stream. The natural flake graphite is then transferred to the center of the rotor through the circulation path. The natural flake graphite is spheroidized by repeating this operation.

In the spheroidization process, large natural flake graphite particles are agglomerated to an increased thickness while incorporating small particles. The natural flake graphite is gradually spheroidized by repeating the above operation due to bending which occurs accompanying plastic deformation of flake crystals in the a-axis direction caused by energy produced by collision between the particles and collision with the rotor. Specifically, high-structured hexagonal graphite layers of the natural graphite are spheroidized while being oriented in various directions by repeating the above operation. The properties of the spheroidized particles are adjusted by adjusting the particle diameter of the natural flake graphite raw material, the rotational speed of the rotor, the amount (concentration) of the natural flake graphite to be treated, the treatment time, and the like.

The structure of the spherical natural graphite particles may be determined by SEM observation. FIG. 1 shows an electron micrograph of the structure of the spherical natural graphite particles of Example 2. The flake structure of the natural graphite is observed in the cross-sectional structure of a graphite/cured resin molded product prepared by mixing the spherical natural graphite particles and the thermosetting resin and molding the mixture. A structure in which the flake structures are randomly and minutely dispersed is observed.

Spherical natural graphite particles of which the properties are adjusted as follows are used.

  (1) The average particle diameter is 20 to 100 $\mu$m.
  (2) The particle density measured in water is 2 g/cm$^3$ or more.
  (3) The compression recovery rate when pressurized at 50 MPa is 120% or less, and the density during compression is 1.9 g/cm$^3$ or more.

If the average particle diameter of the spherical natural graphite particles is less than 20 $\mu$m, the fluidity of the mixture of the spherical natural graphite particles and the thermosetting resin decreases, whereby the graphite/cured resin molded product shows a defective structure. If the average particle diameter of the spherical natural graphite particles exceeds 100 $\mu$m, a nonhomogeneous portion partially occurs in the texture structure. As a result, when producing a thin molded product, the molded product has insufficient gas impermeability. The fluidity of the mixture decreases when the particle density is low. Therefore, dense spherical natural graphite particles having a particle density measured in water (e.g., particle density measured in water using a pycnometer method) of 2 g/cm$^3$ or more are used.

The spherical natural graphite particles must have a compression recovery rate when pressurized at 50 MPa of 120% or less and a density during compression of 1.9 g/cm$^3$ or more.

The term "compression recovery rate" refers to the ratio (%) of the volume of the spherical natural graphite particles when compressing the spherical natural graphite particles and the volume of the spherical natural graphite particles after removing the pressure. Specifically, a die with a diameter of 60 is filled with 25 g of the spherical natural graphite particles. After uniaxially pressurizing the spherical natural graphite particles at 50 MPa for 15 seconds, the volume of the spherical natural graphite particles is measured. After removing the pressure, the volume of the molded product (compact) removed from the die is measured. The compression recovery rate is calculated according to the following expression.

$$\text{Compression recovery rate (\%)} = \text{(volume of molded product after removing pressure)} / \text{(volume of molded product under pressure)} \times 100$$

The compression recovery rate is a factor that relates to expansion when removing the graphite/cured resin molded product subjected to thermocompression molding from the mold. If the compression recovery rate exceeds 120% and the density when pressurized at 50 MPa is less than 1.9 g/cm³, the graphite/cured resin molded product cannot have a dense structure with a small number of voids, whereby the strength and the gas impermeability of the graphite/cured resin molded product decrease.

The size of the spherical natural graphite particles dispersed in the resin observed at the cross section of the molded product prepared by integrally binding the spherical natural graphite particles with the thermosetting resin is preferably 50 $\mu$m or less. Since the spherical natural graphite particles have a flake structure in which the hexagonal graphite layers are oriented in random directions, the spherical natural graphite particles show isotropy. Therefore, the strain at break increases. In the fuel cell separator material according to the present invention, the ratio of the resistivities in the thickness direction and the plane direction of the graphite/cured resin molded product is 1.5 or less, and the strain at break determined by a four-point bending test is 0.5% or more. These properties are suitable for a separator material.

A process of producing the fuel cell separator material according to the present invention includes spheroidizing natural flake graphite having an average particle diameter of 1 to 50 $\mu$m by dry impact blending to prepare spherical natural graphite particles having (1) an average particle diameter of 20 to 100 $\mu$m, (2) a particle density measured in water of 2 g/cm³ or more, and (3) a compression recovery rate when pressurized at 50 MPa of 120% or less.

The natural flake graphite is agglomerated and spheroidized by dry impact blending using a device such as a hybridization system (NHS-O manufactured by Nara Machinery Co., Ltd.). The average particle diameter, the particle density, the compression recovery rate, the density during compression, and the like of the spherical natural graphite particles are adjusted to specific values by appropriately adjusting the particle diameter of the natural flake graphite raw material, the rotational speed of the rotor, the amount (concentration) of the natural flake graphite to be treated, the treatment time, and the like.

The spherical natural graphite particles thus prepared and a thermosetting resin are mixed so that the weight ratio of the graphite particles and the solid content of the thermosetting resin is 90:10 to 65:35. The components are then sufficiently homogenized (mixed). If the weight ratio of the spherical natural graphite particles exceeds 90, the amount of the thermosetting resin becomes insufficient, whereby the fluidity of the mixture decreases. As a result, the mixture exhibits poor moldability, and the molded product has a defective structure. This results in a decrease in gas impermeability. If the weight ratio of the spherical natural graphite particles is less than 65, electrical conductivity decreases.

As the thermosetting resin, a thermosetting resin is used which has a heat resistance sufficient to withstand a temperature of 80 to 120°C (i.e., operating temperature of a fuel cell), and an acid resistance sufficient to withstand sulfonic acid or sulfuric acid with a pH of about 2 to 3. For example, a phenol resin, a furan resin, an epoxy resin, a phenol epoxy resin, and the like are used either used individually, or two or more may be used together.

When mixing the spherical natural graphite particles and the thermosetting resin, it is preferable to dissolve the thermosetting resin in an appropriate organic solvent such as an alcohol or an ether to prepare a low-viscosity thermosetting resin solution, and mix the spherical natural graphite particles with the thermosetting resin solution. In this case, the spherical natural graphite particles and the thermosetting resin can be uniformly mixed. The spherical natural graphite particles and the thermosetting resin are sufficiently mixed using an appropriate mixer such as a kneader, a pressuring kneader, or a twin-screw mixer. The mixture is then dried to remove low-boiling-point components contained in the resin, the organic solvent, and the like. The dried product is ground to prepare a molding powder having an appropriate grain size.

A mold provided with protrusions for forming gas passages is filled with the molding powder. The molding powder is then thermocompression-molded at a temperature of 120°C or more (preferably 150 to 250°C) and a pressure of 20 to 100 MPa to produce a fuel cell separator material. A fuel cell separator is produced using the fuel cell separator material either directly or after more precisely forming gas passage grooves, as required.

EXAMPLES

The present invention is described below by way of examples and comparative examples.

Examples 1 to 3 and Comparative Example 1

Natural flake graphite powders having different average particle diameters were agglomerated and spheroidized by dry impact blending using a hybridization system (NHS-O manufactured by Nara Machinery Co., Ltd.). Spherical natural graphite particles differing in average particle diameter, particle density, compression recovery rate, and density during compression were prepared by changing the rotational speed of the rotor, the amount of the natural flake graphite to be treated, and the treatment time.

Comparative Example 2

Graphite particles were pelletized by a rotary pelletizing method using the natural flake graphite used in Example 2. Aggregates of the natural flake graphite powder were obtained.

Comparative Example 3

Artificial graphite powder was processed using the hybridization system. However, aggregates could not be obtained.

Comparative Example 4

A natural flake graphite powder having an average particle diameter of 60 $\mu$m was used as a sample without pelletizing the graphite powder.
A cresol novolac epoxy resin and a phenol novolac epoxy resin were dissolved in methyl ethyl ketone together with a curing accelerator to prepare a resin solution with a resin solid content of 60%. The graphite particles obtained in the examples and comparative examples were mixed with the resin solution so that the weight ratio of the graphite particles and the resin (solid content) was 80:20. The components were sufficiently mixed using a twin-screw kneader. After drying the mixture under vacuum, the dried product was ground to a grain size of 50 mesh or less to prepare a molding powder.
A mold provided with protrusions for forming gas passages (width: 1 mm, depth: 0.5 mm) (minimum thickness of upper and lower molds: 0.3 mm, external shape of molded product: 200$\times$200 mm) was filled with the molding powder. The mold was placed in a hot press machine maintained at 180°C, and the molding powder was thermocompression-molded for 10 minutes under a pressure of 50 MPa to produce a fuel cell separator material formed of a graphite/cured resin molded product. Table 1 shows the production conditions.

TABLE 1

|  |  | Example | | | | Comparative Example | | |
|---|---|---|---|---|---|---|---|---|
|  |  | 1 | 2 | 3 | 1 | 2 | 3 | 4 |
| Raw material graphite | Natural flake graphite | Used | Used | Used | Used | Used | - | Used |
|  | Artificial graphite | - | - | - | - | - | Used | - |
|  | Average particle diameter ($\mu$m) | 10 | 25 | 40 | 65 | 25 | 50 | 60 |
|  | Spheroidization process | *1 | *1 | *1 | *1 | *2 | *1 | *3 |
| Graphite particle spheroidization | Average particle diameter ($\mu$m) | 30 | 55 | 85 | 110 | 60 | *4 | 60 |
|  | Particle density (g/cm$^3$) | 2.12 | 2.15 | 2.17 | 2.18 | 1.50 | - | - |
|  | Compression recovery rate (%) | 109 | 105 | 103 | 102 | 110 | 125 | 108 |
|  | Density during compression (g/cm$^3$) | 1.92 | 1.95 | 2.03 | 2.05 | 1.92 | - | 1.93 |

(continued)

| | Example | | | Comparative Example | | | |
|---|---|---|---|---|---|---|---|
| | 1 | 2 | 3 | 1 | 2 | 3 | 4 |
| Fluidity of molding powder (g/sec)[*5] | 0.6 | 1.8 | 2.2 | 3.1 | 0.3 | - | 1.0 |

(Note)
[*1] Hybridization system
[*2] Rotary pelletizing method
[*3] Not treated
[*4] Aggregates were not obtained
[*5] Mono-hole fluidity at 110°C (JIS K6911)

A test piece was cut from the graphite/cured resin molded product, and the material properties were measured. The results are shown in Table 2.

TABLE 2

| | Example | | | Comparative Example | | | |
|---|---|---|---|---|---|---|---|
| | 1 | 2 | 3 | 1 | 2 | 3 | 4 |
| Density (g/cm$^3$) | 1.91 | 1.93 | 1.95 | 1.97 | 1.91 | 1.90 | 1.92 |
| Bending strength (MPa) | 57 | 48 | 45 | 43 | 45 | 58 | 47 |
| Strain at break (%) | 0.62 | 0.56 | 0.53 | 0.44 | 0.45 | 0.48 | 0.37 |
| Resistivity A[*6] (mΩ·cm) | 16.0 | 13.0 | 8.7 | 8.5 | 20.0 | 18.0 | 34.0 |
| Resistivity B[*7] (mΩ·cm) | 13.0 | 9.5 | 6.5 | 5.9 | 6.0 | 8.9 | 6.4 |
| Resistivity ratio[*8] | 1.2 | 1.4 | 1.3 | 1.4 | 3.3 | 2.0 | 5.3 |
| Gas permeability [$\times 10^{-11}$mol/(MPa.m$^2$.s)] | 2 | 3 | $3 \times 10^{-1}$ | $8 \times 10^6$ | $8 \times 10^7$ | $7 \times 10^6$ | $3 \times 10^3$ |

(Note)
[*6] Resistivity in thickness direction
[*7] Resistivity in plane direction
[*8] A/B

As shown in Tables 1 and 2, the separator materials of Example 1 to 3 exhibited a high strain at break, low gas permeability, and a small ratio of resistivities in the thickness direction and the plane direction (i.e., excellent isotropy).

On the other hand, the separator material by the Comparative Example 1 exhibited a small strain at break and very high gas permeability since the average particle diameter of the spherical natural graphite particles was large. Since the separator material of Comparative Example 2 was pelletized using the rotary pelletizing method, spherical natural graphite particles could not be obtained. Moreover, the particle density was low. The separator material exhibited poor moldability due to damage to the particles during molding. The separator material had a large ratio of resistivities in the thickness direction and the plane direction and very high gas permeability. The separator material of Comparative Example 3 using artificial graphite was not spheroidized and exhibited poor moldability. The separator material exhibited a low strain at break, a large ratio of resistivities in the thickness direction and the plane direction, and high gas permeability. The separator material of Comparative Example 4 in which natural flake graphite was not spheroidized by dry impact blending exhibited a low strain at break, a large ratio of resistivities in the thickness direction and the plane direction, and high gas permeability.

A flat mold was charged with the molding powders obtained in Example 2 and Comparative Example 4. The molding powder was thermocompression-molded at a pressure of 50 MPa and a temperature of 180°C to obtain a flat molded product (200×200×2 mm). The molded product was provided with a groove (width: 1 mm, depth: 0.7 mm) using an end mill (diameter: 1.0) at a rotational speed of 5000 rpm to determine processability and the particle defect width after forming the groove. The results are shown in Table 3.

TABLE 3

| | Example 2 | Comparative Example 4 |
|---|---|---|
| Shore hardness | 34 | 14 |

(continued)

| | Example 2 | Comparative Example 4 |
|---|---|---|
| Groove processing rate[*9] (mm/min) | 600 | 600 |
| Maximum particle defect width[*10] (mm) | 0.05 | 0.15 |

(Note)
*9 Maximum processing rate without end mill breakage when forming a groove (width: 1 mm, depth: 0.7 mm) using an end mill (diameter: 1.0) at a rotational speed of 5000 rpm
*10 Maximum particle defect width in the direction perpendicular to a groove was measured by a lighting machine when forming a groove (width: 1 mm, depth: 0.7 mm) using an end mill (diameter: 1.0) at a rotational speed of 5000 rpm.

**Claims**

1. A fuel cell separator material comprising a graphite/cured resin molded product obtained by integrally binding spherical natural graphite particles with a thermosetting resin, the spherical natural graphite particles being prepared by spheroidizing natural flake graphite having an average particle diameter of 1 to 50 $\mu$m by dry impact blending, and having (1) an average particle diameter of 20 to 100 $\mu$m, (2) a particle density measured in water of 2 g/cm$^3$ or more, and (3) a compression recovery rate when pressurized at 50 MPa of 120% or less.

2. The fuel cell separator material according to claim 1, wherein the size of the natural graphite dispersed in the resin measured by cross-sectional observation of the graphite/cured resin molded product is 50 $\mu$m or less, and the graphite/cured resin molded product has a ratio of resistivities in the thickness direction and the plane direction of 1.5 or less, and a strain at break determined by a four-point bending test of 0.5% or more.

3. A process of producing a fuel cell separator material comprising spheroidizing natural flake graphite having an average particle diameter of 1 to 50 $\mu$m by dry impact blending to prepare spherical natural graphite particles having (1) an average particle diameter of 20 to 100 $\mu$m, (2) a particle density measured in water of 2 g/cm$^3$ or more, and (3) a compression recovery rate when pressurized at 50 MPa of 120% or less, mixing the spherical natural graphite particles and a thermosetting resin so that the weight ratio of the graphite particles and the solid content of the resin is 90:10 to 65:35, drying and grinding the mixture to prepare a molding powder, filling a mold provided with protrusions for forming gas passages with the molding powder, and thermocompression-molding the molding powder at a temperature of 120°C or more and a pressure of 20 to 100 MPa.

Fig.1

<table>
<tr><td colspan="2">**INTERNATIONAL SEARCH REPORT**</td><td>International application No.<br>PCT/JP2006/320355</td></tr>
</table>

A. CLASSIFICATION OF SUBJECT MATTER
*H01M8/02*(2006.01)i

According to International Patent Classification (IPC) or to both national classification and IPC

B. FIELDS SEARCHED

Minimum documentation searched (classification system followed by classification symbols)
H01M8/02

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2007 |
| Kokai Jitsuyo Shinan Koho | 1971-2007 | Toroku Jitsuyo Shinan Koho | 1994-2007 |

Electronic data base consulted during the international search (name of data base and, where practicable, search terms used)
JSTPlus(JDream2)

C. DOCUMENTS CONSIDERED TO BE RELEVANT

| Category* | Citation of document, with indication, where appropriate, of the relevant passages | Relevant to claim No. |
|---|---|---|
| A | Tomoyuki UCHIYAMA et al., 'Kosoku Kiryuchu Shogekiho ni yoru Kokuen no Kyujoka', Hokkaido Industrial Research Institute Hokoku, No.301 (2002), 30 August, 2002 (30.08.02), pages 163 to 166 | 1-3 |
| A | JP 2005-66378 A (Hosokawa Micron Corp.), 17 March, 2005 (17.03.05), (Family: none) | 1-3 |
| A | JP 10-40938 A (Toyota Motor Corp.), 13 February, 1998 (13.02.98), (Family: none) | 1-3 |
| A | JP 2000-173630 A (Tokai Carbon Co., Ltd.), 23 June, 2000 (23.06.00), (Family: none) | 1-3 |

☒ Further documents are listed in the continuation of Box C.    ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>09 January, 2007 (09.01.07) | Date of mailing of the international search report<br>16 January, 2007 (16.01.07) |
|---|---|
| Name and mailing address of the ISA/<br>Japanese Patent Office | Authorized officer |
| Facsimile No. | Telephone No. |

Form PCT/ISA/210 (second sheet) (April 2005)

## INTERNATIONAL SEARCH REPORT

| | International application No. |
|---|---|
| | PCT/JP2006/320355 |

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2001-126744 A  (Osaka Gas Co., Ltd.),<br>11 May, 2001 (11.05.01),<br>(Family: none) | 1-3 |
| A | JP 2005-129507 A  (JFE Chemical Kabushiki Kaisha),<br>19 May, 2005 (19.05.05),<br>(Family: none) | 1-3 |

Form PCT/ISA/210 (continuation of second sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 11297337 A
- JP 2000021421 A
- JP 2001126744 A
- JP 2003238135 A
- JP 2004269567 A
- JP 2004253242 A